# EUROPEAN PATENT SPECIFICATION

(11) **EP 3 224 042 B1**
(45) Date of publication and mention of the grant of the patent: **14.07.2021**
(21) Application number: 15862176.3
(22) Date of filing: 02.09.2015
(51) Int. Cl.: B32B 15/08, B32B 15/14, B32B 27/12, B32B 7/08, B32B 3/08

(54) **FIBER-METAL LAMINATE AND ITS MANUFACTURING METHOD**
FASER-METALL-LAMINAT UND DESSEN HERSTELLUNGSVERFAHREN
STRATIFIÉ DE FIBRE-MÉTAL ET PROCÉDÉ DE FABRICATION CORRESPONDANT

(30) Priority: 24.11.2014 CN 201410680802
(43) Date of publication of application: 04.10.2017
(73) Proprietor: BYD Company Limited, Shenzhen, Guangdong 518118 (CN)
(72) Inventor: MAO, Yangen, Shenzhen Guangdong 518118 (CN); MAO, Dingwen, Shenzhen Guangdong 518118 (CN); LAN, Pinshuang, Shenzhen Guangdong 518118 (CN)
(74) Representative: Gulde & Partner
(86) International application number: PCT/CN2015/088888
(87) International publication number: WO 2016/082599

(56) References cited:
- WO-A1-00/40399
- WO-A1-2010/120426
- CN-A- 101 524 903
- CN-U- 202 895 815
- CN-Y- 200 957 682
- US-A1- 2005 271 859
- US-B1- 6 183 838
- US-B1- 6 485 820
- None

## Description

### FIELD

Embodiments of the present disclosure generally relate to the field of manufacturing technology for a composite material with a fiber-metal laminate structure, and more particularly to a fiber-metal laminate and its manufacturing method.

### BACKGROUND

An aluminum alloy material has been widely applied in the aerospace industry since the early 1930s, for its advantages of low density, high intensity, high impact resistance, good machinability, and low costs. However, there are also some disadvantages which limit its further application, such as short fatigue life and poor corrosion resistance. A composite material including a glass fiber and a carbon fiber, which was invented since 1950, not only shows a high specific strength and a high specific stiffness, but also displays good fatigue performance and excellent corrosion resistance. However, such laminated composite material has poor lateral strength and low impact resistance, and is very easily to be delaminated from its interlayer junction surfaces. In order to solve some of the above disadvantages, a fiber-metal laminate was developed by Delft University of Technology using both a metal material and a fiber in the late 1970s.

The fiber-metal laminate is a new-type composite material having a hybrid and reinforced structure, typically represented by an aramid-aluminum laminate (i.e., ARALL) and a glass-reinforce aluminum (i.e., GLARE). The fiber-metal laminate and its manufacturing method, mechanics performance, advantages and potential application are disclosed in a reference document (Development of a New Hybrid Material Aramid-aluminum Laminate for Aircraft Structure, Vogelesang, L., Ind. Eng.Chem.Prod.Res.Dev., 1983, pp.492-496) and US patent literatures (US5039571, US5547735 and US5219629). Currently, the glass-reinforce aluminum material has been widely used in the fuselage shell of aircraft 380, which is a significant innovation in the aircraft material technology.

The fiber-metal laminate, not only taking both advantages of the metal material and the fiber, but also overcoming most shortcomings thereof, is a structural material having immense application prospects in aerospace, military, automobile and other high-tech fields. Although the fiber-metal laminate shows such excellent performances mentioned above, the adhesion between the metal layer and the fiber cloth thereof is very poor. Further relevant background art is disclosed in WO 00/40399 A1 and US 6183838 B1. WO 00/40399 A1 discloses multilayers constituted by a layer of a resin-fiber composition and further layers such as cloth or maybe an optional metal layer. The chopped fibers are not fixed with one part in a cloth and with a second part in a resin. US 6183838 B1 discloses multilayers comprising a cloth layer and a resin layer where a plurality of fibers is present between them and one end of those fibers is fixed in the cloth and the other end in the resin but no metal layers are present.

### SUMMARY

An object of the present disclosure is to provide a fiber-metal laminate, so as to solve at least one problem existing in the related art, for example, a weak adhesion between the metal layer and the fiber cloth of the fiber-metal laminate.

Embodiments of one aspect the present disclosure provide a fiber-metal laminate. The fiber-metal laminate including: fiber cloth; a resin layer, disposed on the fiber cloth; a metal layer, disposed on the resin layer; and a plurality of chopped fibers, distributed between the fiber cloth and the resin layer, wherein each chopped fiber includes a first part inserted into the fiber cloth and a second part fixed in the resin layer.

In some embodiments, the chopped fiber is at least one selected from a group consisting of glass fiber, carbon fiber, and aramid fiber.

In some embodiments, the chopped fibers have a length of 6 mm to 30 mm, and have a cross-sectional diameter of 10 µm to 30 µm.

In some embodiments, the metal layer is one selected from a group consisting of aluminum alloy plate, titanium alloy plate, and steel plate; and the metal layer has a thickness of 0.1 mm to 2 mm.

In some embodiments, a surface of the metal layer towards the resin layer is provided with a plurality of micropores having a diameter of 15µm to 50 µm.

In some embodiments, the surface of the metal layer towards the resin layer is of an anodic oxide layer being in contact with the resin layer..

In some embodiments, the fiber cloth is at least one selected from a group consisting of glass fiber cloth, carbon fiber cloth, and aramid fiber cloth; and the fiber cloth has a thickness of 0.1 mm to 2 mm.

In some embodiments, the resin layer is at least one selected from a group consisting of acrylic layer, epoxy resin layer, and urethane resin layer, and the resin layer has a thickness of 0.1 mm to 2 mm.

In some embodiments, the metal layer includes a first metal layer and a second metal layer, and the resin layer includes a first resin layer and a second resin layer; wherein the second resin layer is disposed on the second metal layer, the fiber cloth is disposed on the second resin layer, the first resin layer is disposed on the fiber cloth, and the first metal layer is disposed on the first resin layer, the plurality of chopped fibers is distributed both between the second resin layer and the fiber cloth, and the fiber cloth and the first resin layer.

Embodiments of another aspect the present disclosure provide a method for manufacturing a fiber-metal laminate. The method includes steps of: providing a plurality of chopped fibers on a surface of the fiber cloth; inserting a first part of the chopped fiber into the surface of the fiber cloth; immersing fiber cloth inserted with the first part of the chopped fiber into a resin slurry to obtain immersed fiber cloth; overlaying a metal layer on the immersed fiber cloth; and hot pressing to obtain the fiber-metal laminate.

In some embodiments, the first part of the chopped fiber is inserted into the surface of the fiber cloth by needle-punching treatment.

In some embodiments, the needle-punching treatment is performed at a needle density of 100 times/cm² to 250 times/cm²,and under a needle depth of 0.1 mm to 0.5 mm.

In some embodiments, the chopped fiber is at least one selected from a group consisting of glass fiber, carbon fiber, and aramid fiber; and the chopped fibers have a cross-sectional diameter of 10 µm to 30 µm, and have a length of 6 mm to 30 mm.

In some embodiments, the fiber cloth is at least one selected from a group consisting of glass fiber cloth, carbon fiber cloth, and aramid fiber cloth; and the fiber cloth has a thickness of 0.1 mm to 2 mm.

In some embodiments, the step of providing the plurality of chopped fibers on the surface of the fiber cloth is performed by steps of: placing the fiber cloth in an ethanol solution; adding the plurality of chopped fibers into the ethanol solution under an ultrasonic condition; depositing the plurality of chopped fibers on the surface of the fiber cloth; and drying the fiber cloth deposited with the plurality of chopped fibers.

In some embodiments, providing the plurality of chopped fibers on the surface of the fiber cloth includes: providing the plurality of chopped fibers on a first surface of the fiber cloth; and providing the plurality of chopped fibers on a second surface of the fiber cloth.

In some embodiments, the method includes steps of: immersing the first and second surfaces of the fiber cloth inserted with the first part of the chopped fiber into the resin slurry; overlaying a first metal layer on the first surface of the fiber cloth, and a second metal layer on the second surface of the fiber cloth; and hot pressing to obtain the fiber-metal laminate.

In some embodiments, the surface of the fiber cloth inserted with the first part of the chopped fiber is immersed into the resin slurry for 10 minutes to 60 minutes, to form a resin slurry layer with a thickness of 0.1 mm to 2mm on the surface of the fiber cloth.

In some embodiments, the resin layer is at least one selected from a group consisting of acrylic resin layer, epoxy resin layer, and urethane resin layer.

In some embodiments, the metal layer is one selected from a group consisting of aluminum alloy plate, titanium alloy plate, and steel plate; and the metal layer has a thickness of 0.1 mm to 2 mm.

In some embodiments, the method further includes steps of: forming a plurality of micropores having an average diameter of 15µm to 50 µm at a surface of the metal layer, and attaching the surface of the metal layer formed with the plurality of micropores with the surface of the immersed fiber cloth inserted with the first part of the chopped fiber.

In some embodiments, the plurality of micropores is formed by a chemical etching method, a laser pore-forming method, an arc pore-forming method or an electrochemical oxidation method.

In some embodiments, the step of hot pressing is performed at a temperature of 140 °C to 200 °C and at a pressure of 0.1 MPa to 20 MPa for 10 minutes to 30 minutes.

For the fiber-metal laminate according to embodiments of the present disclosure, the fiber cloth and the metal layer are bonded together by the resin layer. The plurality of chopped fibers is distributed between the resin layer and the fiber cloth, and each chopped fiber includes a first part inserted into the fiber cloth and a second part fixed in the first resin layer, so that the metal layer and the fiber cloth are bonded firmly with excellent adhesion.

Additional aspects and advantages of the embodiments of the present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the drawings, in which:
Fig. 1 is a schematic view showing a fiber-metal laminate according to an embodiment of the present disclosure; and
Fig. 2 is a schematic view showing a fiber-metal laminate according to another embodiment of the present disclosure.

### DETAILED DESCRIPTION

Reference will be made in detail to embodiments of the present disclosure. The embodiments described herein with reference to the accompany drawings are explanatory and illustrative, which are used to generally understand the present disclosure. The embodiments shall not be construed to limit the present disclosure.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items. It should be further understood that, when used in the specification, terms "including" and/or "containing" specify the presence of stated features, operations, elements and/or components, but do not exclude the presence or addition of one or more other features, operations, elements, components and/or groups thereof.

For the purpose of the present description and of the following claims, the definitions of the numerical ranges always include the extremes unless otherwise specified.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present invention, "a plurality of" means two or more than two, unless specified otherwise.

A fiber-metal laminate according to embodiments of the present disclosure will be discussed below in details.

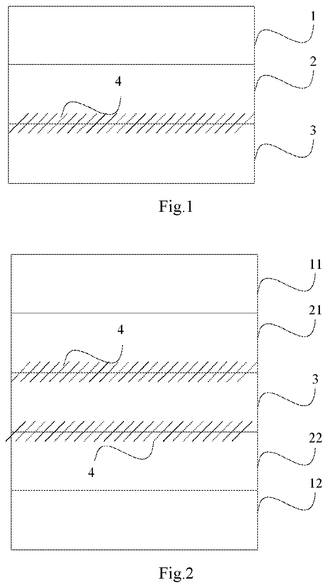

According to an embodiment of the present disclosure, referring to Fig.1, the fiber-metal laminate includes: fiber cloth 3; a resin layer 2, disposed on the fiber cloth 3; a metal layer 1, disposed on the resin layer 2; and a plurality of chopped fibers 4, distributed between the fiber cloth 3 and the resin layer 2, wherein each chopped fiber 4 includes a first part inserted into the fiber cloth 3 and a second part fixed in the resin layer 2.

According to embodiments the present disclosure, the metal layer may be made of any conventional material or may be of any common structure in the art. In some embodiments, the metal layer is one selected from a group consisting of aluminum alloy plate, titanium alloy plate, and steel plate. In one embodiment, the metal layer is an aluminum alloy plate. The metal layer may be of a thickness without any special limitation, which may be adjusted in a wide range as practically required by those skilled in the art. In some embodiments, the metal layer has a thickness of about 0.1 mm to about 2 mm.

According to embodiments the present disclosure, in order to further improve the adhesion between the metal layer and the resin layer, a surface of the metal layer towards the resin layer is provided with a plurality of micropores. In some embodiments, each micropore has a diameter of 15µm to 50 µm, so as to improve the adhesion between the metal layer and the resin layer.

In some embodiments, in the case that the metal layer is the aluminum alloy plate, the surface of the metal layer towards the resin layer is of an anodic oxide layer being in contact with the resin layer. It would be appreciated by those skilled in the art that the anodic oxide layer (particularly an anodic oxide layer made of aluminium oxide) is of a loose and porous structure capable of providing higher adhesion between the metal layer and the resin layer. The anodic oxide layer (particularly an anodic oxide layer made of aluminium oxide) is made of ceramic, which has high rigidity, thereby further improve the adhesion between the metal layer and the resin layer.

According to embodiments of the present disclosure, the fiber cloth may be made of various conventional materials without any special limitation. In some embodiments, the fiber cloth is at least one selected from a group consisting of glass fiber cloth, carbon fiber cloth and aramid fiber cloth. In some other embodiments, the fiber cloth may be a blended fabric cloth made of at least one selected from a group consisting of glass fiber, carbon fiber, and aramid fiber.

In a specific example, as the glass fiber cloth has a thermal expansion coefficient similar to that of the metal layer, it is used as the fiber cloth, thereby further improve the adhesion between the metal layer and the resin layer under various environments.

According to embodiments of the present disclosure, the fiber cloth has an adjustable thickness in a wide range without any special limitation. In some embodiments, the fiber cloth has a thickness of about 0.1 mm to about 2 mm.

According to embodiments of the present disclosure, the resin layer is used to combine the metal layer and the fiber cloth into an integral structure. The resin layer may be obtained by curing; and made of any conventional resin in the art. In some embodiments, the resin layer is at least one selected from a group consisting of acrylic resin layer, epoxy resin layer, and urethane resin layer. In one embodiment, the resin layer is an epoxy resin layer. In some embodiments, the resin layer has a thickness of about 0.1 mm to about 2 mm.

According to embodiments of the present disclosure, a plurality of chopped fibers is distributed between the fiber cloth and the resin layer, and each chopped fiber includes a first part inserted into the fiber cloth and a second part fixed in the first resin layer. In other words, one end of the chopped fiber is inserted into the fiber cloth, and the other one end of the same chopped fiber is fixed in the resin layer. The first part inserted into the fiber cloth is connected to the second part fixed in the resin layer. It would be appreciated by those skilled in the art that the first part inserted into the fiber cloth is inevitably not connected to the second part fixed in the first resin layer due to a manufacturing process. In the present disclosure, the term "chopped fiber" used herein is defined as including both the first and second parts.

According to embodiments of the present disclosure, in order to improve the adhesion between every adjacent two layers of the fiber-metal laminate, the chopped fibers have a length of about 6 mm to about 30 mm.

According to embodiments of the present disclosure, the chopped fiber may be at least one selected from a group consisting of glass fiber, carbon fiber, and aramid fiber. The chopped fiber may have a cross-sectional diameter adjustable in a wide range. In some embodiments, the chopped fibers have a cross-sectional diameter of about 10 µm to about 30 µm.

It would be appreciated that the layer number of the fiber-metal laminate may be increased or decreased as practically required. In some embodiments, the metal layer includes a first metal layer and a second metal layer, and the resin layer includes a first resin layer and a second resin layer. Referring to Fig.2, the second resin layer 22 is disposed on the second metal layer 12; the fiber cloth 3 is disposed on the second resin layer 22; the first resin layer 21 is disposed on the fiber cloth 3; the first metal layer 11 is disposed on the first resin layer 21; and the plurality of chopped fibers 4 is distributed both between the second resin layer 22 and the fiber cloth 3, and between the fiber cloth 3 and the first resin layer 21.

Embodiments of the present disclosure also provide a method for manufacturing a fiber-metal laminate. The method includes the following steps of: providing a plurality of chopped fibers on a surface of the fiber cloth; inserting a first part of the chopped fiber into the surface of the fiber cloth; immersing the surface of the fiber cloth inserted with the first part of the chopped fiber into a resin slurry to obtain immersed fiber cloth; overlaying a metal layer on the immersed fiber cloth; and hot pressing to obtain the fiber-metal laminate.

As mentioned above, the fiber cloth may be any conventional cloth in the art. In some embodiments, the fiber cloth is at least one selected from a group consisting of glass fiber cloth, carbon fiber cloth and aramid fiber cloth. In some other embodiments, the fiber cloth may be a blended fabric cloth made of at least one selected from a group consisting of glass fiber, carbon fiber, and aramid fiber.

In a specific example, as the glass fiber cloth has a thermal expansion coefficient similar to that of the metal layer, it is used as the fiber cloth, thereby further improve the adhesion between the metal layer and the resin layer under various environments.

According to embodiments of the present disclosure, the fiber cloth has an adjustable thickness in a wide range without any special limitation. In some embodiments, the fiber cloth has a thickness of about 0.1 mm to about 2 mm.

According to embodiments of the present disclosure, the chopped fiber is made of at least one selected from a group consisting of glass fiber, carbon fiber, and aramid fiber. In some embodiments, the chopped fibers have a length of about 6 mm to about 30 mm, and have a cross-sectional diameter of about 10 µm to about 30 µm, thereby improve the adhesion between every two adjacent layers of the fiber-metal laminate.

According to embodiments of the present disclosure, the plurality of chopped fibers is distributed on the surface of the fiber cloth uniformly, so that they can be inserted into the fiber cloth uniformly by the subsequent needle-punching treatment. According to embodiments of the present disclosure, the chopped fiber may be distributed on the surface of the fiber cloth by various conventional methods. In some embodiments, the plurality of chopped fibers may be directly distributed on the surface of the fiber cloth uniformly in air.

In order to distribute the plurality of chopped fibers more uniformly, the step of providing the plurality of chopped fibers on the surface of the fiber cloth is performed by steps of: placing the fiber cloth in an ethanol solution; adding the plurality of chopped fibers into the ethanol solution under an ultrasonic condition; depositing the plurality of chopped fibers on the surface of the fiber cloth; and drying the fiber cloth deposited with the plurality of chopped fibers. For the above steps, the ultrasonic condition may be provided by any conventional method in the art. In some embodiments, the ultrasonic condition may be of a frequency of about 5 KHz to about 50 KHz, which is not specially limited herein.

The plurality of chopped fibers may be distributed on the surface of the fiber cloth with an adjustable amount as practically required. In some embodiments, about 0.1 g to about 1 g of the chopped fiber is added for each square centimeter of the fiber cloth.

According to embodiments of the present disclosure, after the plurality of chopped fibers is provided on the surface of the fiber cloth, the first part of the chopped fiber is inserted into the fiber cloth by needle-punching treatment. In some embodiments, the needle-punching treatment is performed by a needle-punching machine, which is aligned above the fiber cloth in advance, at a needle density of about 100 times/cm² to about 250 times/cm², and a needle depth of about 0.1 mm to about 0.5 mm.

It would be appreciated that some chopped fibers are inserted into the fiber cloth with their first parts; others are not inserted therein inevitably, which needs to be removed thereafter. A removing method may include purging the surface of the fiber cloth with compressed air having a pressure of about 0.1 MPa to about 1 MPa.

According to embodiments of the present disclosure, in the case that both surfaces of the fiber cloth need to be bonded with two metal layers, respectively, the fiber cloth is inserted with the first part of chopped fiber at both surfaces by the needle-punching treatment. In specific, the plurality of chopped fibers is provided on a second surface of the fiber cloth inserted with the first part of chopped fiber at a first surface of the fiber cloth; and then the first part of chopped fiber is inserted into the second surface of the fiber cloth by the needle-punching treatment. In other words, the step of providing the plurality of chopped fibers on the surface of the fiber cloth includes: providing the plurality of chopped fibers on a first surface of the fiber cloth, and providing the plurality of chopped fibers on a second surface of the fiber cloth.

After above steps, fiber cloth inserted with the first part of the chopped fiber at both surfaces is obtained. Then the method includes steps of: immersing the first and second surfaces of the fiber cloth inserted with the first part of the chopped fiber into the resin slurry; overlaying a first metal layer on the first surface of the fiber cloth; and a second metal layer on the second surface of the fiber cloth; and hot pressing to obtain the fiber-metal laminate.

According to embodiments of the present disclosure, the resin slurry used in immersing the fiber cloth may be various resin solutions conventionally used in the art without any special limitation. In some embodiments, the fiber cloth inserted with the first part of the chopped fiber is immersed into the resin slurry for about 10 minutes to about 60 minutes, to form a resin slurry layer thereon. In some embodiments, the resin layer may be at least one selected from a group consisting of acrylic resin layer, epoxy resin layer, and urethane resin layer. In a specific example, the resin layer is an epoxy resin layer. In some embodiments, the resin slurry may be obtained by dissolving the resin in any conventionally-used solvent without any special limitation, such as chloroform.

In one embodiment, the resin slurry may include 100 weight parts of epoxy resin, such as

E-51 epoxy resin; about 40 weight parts to about 60 weight parts of polysulfone resin; about 10 weight parts to about 20 weight parts of a curing agent, such as dicyandiamide; and about 300 weight parts to about 350 weight parts of a solvent, such as chloroform.

According to embodiments of the present disclosure, after the fiber cloth inserted with the first part of the chopped fiber is immersed into the resin slurry and moved out therefrom, a resin slurry layer is attached on the surface of the fiber cloth. The resin slurry layer may have a thickness without any special limitation. In some embodiments, the resin layer may have a thickness of about 0.1 mm to about 2mm.

According to embodiments of the present disclosure, the second part of the chopped fiber, which is not inserted into and exposed outside the fiber cloth, is distributed in the resin slurry. As a result, after the resin slurry is cured, the second part of the chopped fiber exposed outside the fiber cloth is fixed inside the resin layer, thereby to obtain an integral structure. In the case that both surfaces of the fiber cloth are inserted with the first part of the chopped fiber, then the second part of the chopped fiber at each surface is fixed inside the resin layer after the above-mentioned immersing and curing steps.

According to embodiments of the present disclosure, after the immersing step, a metal layer is overlaid on immersed fiber cloth inserted with the first part of the chopped fiber, and then the resin is cured to integrate the fiber cloth and the metal layer through hot pressing, thereby to obtain the fiber-metal laminate. It would be appreciated that the surface of the fiber cloth inserted with the first part of the chopped fiber should be placed towards the metal layer, so that the resin layer may be in contact with the metal layer after the hot pressing step.

The metal layer may be any conventional metal layer. In some embodiments, the metal layer is one of aluminum alloy plate, titanium alloy plate, and steel plate. The metal layer may have a thickness adjustable in a wide range as practically required. In some embodiments, the metal layer has a thickness of about 0.1 mm to about 2 mm.

In order to further improve the adhesion between every adjacent two layers of the fiber-metal laminate, the method further includes steps of:
forming a plurality of micropores having a diameter of about 15µm to about 50 µm at a surface of the metal layer, and
attaching the surface of the metal layer formed with the plurality of micropores with the surface of the immersed fiber cloth inserted with the first part of the chopped fiber.

According to embodiments of the present disclosure, the plurality of micropores may be formed by various conventional methods in the art. In some embodiments, the plurality of micropores is formed by a chemical etching method, a laser pore-forming method, an arc pore-forming method, or an electrochemical oxidation method.

In some embodiments, in the case that an aluminum alloy plate is used as the metal layer, a plurality of micropores is formed at the surface of the metal layer is performed by an anodizing method well-known to those skilled in the art, thus so as to obtain an anodic oxidation layer on the surface of the metal layer. The step of anodizing is well known to the skilled in the art. In specific: the metal layer is placed in an electrolyte solution; the metal layer is used as an anode; a conductive material which may not react with the electrolyte solution is used as a cathode; the anode and the cathode are electrically connected with the negative electrode and the positive electrode of a power, respectively; after turning on the power, an anodic oxidation layer is formed on the metal layer. The electrolyte solution may be a sulfuric acid solution with a concentration of about 100 g/L to about 250 g/L. The anodizing method is performed at a temperature of about 20 °C to about 30 °C and under a voltage of about 10 V to about 20 V for about 10 minutes to about 30 minutes.

In some embodiments, the laser pore-forming method is performed by a pulse optical fiber laser with a wavelength of about 1.7 µm under the following conditions: a pulse repetition frequency of about 1000 Hz to about 5000Hz, a pore pitch of about 0.01 mm to about 0.2 mm, a scanning speed of about 5000 mm/s to about 12000 mm/s, and a drilling speed of about 10 ms to about 30 ms.

According to embodiments of the present disclosure, after above steps, the step of hot pressing may be performed.

The hot pressing may be performed by any method conventionally-used in the art. In some embodiments, the hot pressing is performed at a temperature of about 140 °C to about 200 °C and at a pressure of about 0.1 MPa to about 20 MPa for about 10 minutes to about 30 minutes followed by steps of cooling and pressure relief, so that the fiber-metal laminate is obtained.

The present disclosure will be described in details below with reference to the following embodiments.

### EMBODIMENT 1

The present embodiment provides a fiber-metal laminate and its manufacturing method. The method includes the following steps.
(1) Preparation:
   Glass fiber cloth having a thickness of 0.4 mm and an area of 200 mmx200mm was taken as fiber cloth. An aluminum alloy 6061 having a thickness of 0.4mm was taken as a metal layer. A glass fiber having a length of 15mm and a cross-sectional diameter of 14µm was taken as a chopped fiber.
(2) The fiber cloth was placed in an ethanol solution flatly. 100 g of the chopped fibers was added into the ethanol solution under an ultrasonic condition having a frequency of 25 KHz. Then the fiber cloth was taken out and dried in air after the chopped fibers deposited on the surface of the fiber cloth.
(3) The chopped fibers deposited on the surface of the fiber cloth were inserted into the fiber cloth at their first part by needle-punching treatment with a needle-punching machine at a needle density of 200 times/cm² and a needle depth of 0.3mm. Those chopped fiber, which are not inserted into the fiber cloth at their first parts, were removed and purged with air under a pressure of 0.2MPa.
(4) The fiber cloth inserted with the first part of the chopped fiber, which was obtained in step (3), was immersed into a resin slurry (including: 100 weight parts of E-51 epoxy resin, 50 weight parts of polysulfone resin, 12 weight parts of dicyandiamide as a curing agent, and 320 weight parts of chloroform as a solvent) for 30 minutes, so as to form a resin layer having a thickness of 0.2 mm on the surface of the fiber cloth.
(5) In an anodizing bath, 200 g/L of sulfuric acid serving as an electrolyte solution, the metal layer was electrolyzed under a voltage of 15 V and at a temperature of 25°C for 22 minutes by means of taking a graphite carbon plate as a cathode and the metal layer as an anode, so as to form an anodic oxidation layer on the surface of the metal layer. The anodic oxidation layer was provided with a plurality of micropores each having a diameter of 15µm to 50 µm.
(6) Two metal layers with the plurality micropores obtained in step (5) and immersed fiber cloth inserted with the first part of the chopped fiber at both surfaces obtained in step (4) were overlaid together according to an order: metal layer-fiber cloth-metal layer, enabling the anodic oxidation layer of the metal layer to be in contact with the resin layer on the surface of the fiber cloth inserted with the first part of the chopped fiber. Then the resin layer was cured to integrate the metal layer and the fiber cloth by hot pressing under a pressure of 2MPa and at a temperature of 165 °C for 20 minutes. After steps of cooling and pressure relief, a fiber-metal laminate denoted S1 was obtained.

### EMBODIMENT 2

The present embodiment provides a fiber-metal laminate manufactured by a method similar to that in EMBODIMENT 1 with exceptions below:
step (1), the metal layer had a thickness of 0.2 mm;
step (6), three metal layers with the plurality micropores obtained in step (5) and two immersed fiber clothes inserted with the first part of the chopped fiber at both surfaces obtained in step (4) were overlaid together according to an order: metal layer-fiber cloth-metal layer-fiber cloth-metal layer.

A fiber-metal laminate denoted S2 was obtained.

### EMBODIMENT 3

The present embodiment provides a fiber-metal laminate manufactured by a method similar to that in EMBODIMENT 1 with exceptions below:
step (5), the plurality of micropores was formed by a laser pore-forming method, instead of the anodic oxidation method. The laser pore-forming method was performed by a pulse optical fiber laser with a wavelength of about 1.7 µm under the following conditions: a pulse repetition frequency of about 2200Hz, a pore pitch of about 0.05 mm, a scanning speed of 10000 mm/s, and a drilling speed of about 12ms, thereby to obtain the plurality of micropores each having a diameter of 15µm to 50µm.

A fiber-metal laminate denoted S3 was obtained.

### EMBODIMENT 4

The present embodiment provides a fiber-metal laminate and its manufacturing method. The method includes the following steps.
(1) Preparation:
   Carbon fiber cloth having a thickness of 1.8 mm and an area of 200 mm×200mm was taken as fiber cloth. An aluminum alloy 6061 having a thickness of 1.2 mm was taken as a metal layer. A glass fiber having a length of 6mm and a cross-sectional diameter of 26µm was taken as a chopped fiber.
(2) The fiber cloth was placed in an ethanol solution flatly. 100 g of the chopped fibers was added into the ethanol solution under an ultrasonic condition having a frequency of 25 KHz. Then the fiber cloth was taken out and dried in air after the chopped fibers deposited on the surface of the fiber cloth.
(3) The chopped fibers deposited on the surface of the fiber cloth were inserted into the fiber cloth at their first part by needle-punching treatment with a needle-punching machine at a needle density of 120 times/cm² and a needle depth of 0.5 mm. Those chopped fiber, which are not inserted into the fiber cloth at their first parts, were removed and purged with air under a pressure of 0.2MPa.
(4) The fiber cloth inserted with the first part of the chopped fiber, which was obtained in step (3), was immersed into a resin slurry (including 100 weight parts of E-51 epoxy resin, 50 weight parts of polysulfone resin, 12 weight parts of dicyandiamide as a curing agent, and 320 weight parts of chloroform as a solvent) for 30 minutes, so as to form a resin layer having a thickness of 1.8 mm on the surface of the fiber cloth.
(5) In an anodizing bath, 200 g/L of sulfuric acid serving as an electrolyte solution, the metal layer was electrolyzed under a voltage of 15 V and at a temperature of 25°C for 22 minutes by means of taking a graphite carbon plate as a cathode and the metal layer as an anode, so as to form an anodic oxidation layer on the surface of the metal layer. The anodic oxidation layer was provided with a plurality of micropores each having a diameter of 15µm to 50µm.
(6) Two metal layers with the plurality micropores obtained in step (5) and immersed fiber cloth inserted with the first part of the chopped fiber at both surfaces obtained in step (4) were overlaid together according to an order: metal layer-fiber cloth-metal layer, enabling the anodic oxidation layer of the metal layer to be in contact with the resin layer on the surface of the fiber cloth inserted with the first part of the chopped fiber. Then the resin layer was cured to integrate the metal layer and the fiber cloth by hot pressing under a pressure of 2MPa and at a temperature of 165 °C for 20 minutes. After steps of cooling and pressure relief, a fiber-metal laminate denoted S1 was obtained.

### EMBODIMENT 5

The present embodiment provides a fiber-metal laminate and its manufacturing method. The method includes the following steps.
(1) Preparation:
   Aramid fiber cloth having a thickness of 0.1 mm and an area of 200 mmx200mm was taken as fiber cloth. A titanium alloy having a thickness of 2 mm was taken as a metal layer. A carbon fiber having a length of 30mm and a cross-sectional diameter of 20µm was taken as a chopped fiber.
(2) The fiber cloth was placed in an ethanol solution flatly. 120 g of the chopped fibers was added into the ethanol solution under an ultrasonic condition having a frequency of 30 KHz. Then the fiber cloth was taken out and dried in air after the chopped fibers deposited on the surface of the fiber cloth.
(3) The chopped fibers deposited on the surface of the fiber cloth were inserted into the fiber cloth at their first part by needle-punching treatment with a needle-punching machine at a needle density of 240 times/cm² and a needle depth of 0.1 mm. Those chopped fiber, which are not inserted into the fiber cloth at their first parts, were removed and purged with air under a pressure of 0.2MPa.
(4) The fiber cloth inserted with the first part of the chopped fiber, which was obtained in step (3), was immersed into a resin slurry (including 100 weight parts of E-51 epoxy resin, 50 weight parts of polysulfone resin, 12 weight parts of dicyandiamide as a curing agent, and 320 weight parts of chloroform as a solvent) for 30 minutes, so as to form a resin layer having a thickness of 1 mm on the surface of the fiber cloth.
(5) A plurality of micropores was formed by a laser pore-forming method. The laser pore-forming method was performed by a pulse optical fiber laser with a wavelength of about 1.7 µm under the following conditions: a pulse repetition frequency of about 2200Hz, a pore pitch of about 0.05 mm, a scanning speed of 10000 mm/s, and a drilling speed of about 12ms, thereby to obtain the plurality of micropores each having a diameter of 15µm to 50 µm.
(6) Two metal layers with the plurality micropores obtained in step (5) and immersed fiber cloth inserted with the first part of the chopped fiber at both surfaces obtained in step (4) were overlaid together according to an order: metal layer-fiber cloth-metal layer, enabling the anodic oxidation layer of the metal layer to be in contact with the resin layer on the surface of the fiber cloth inserted with the first part of the chopped fiber. Then the resin layer was cured to integrate the metal layer and the fiber cloth by hot pressing under a pressure of 2MPa and at a temperature of 165 °C for 20 minutes. After steps of cooling and pressure relief, a fiber-metal laminate denoted S5 was obtained.

### COMPARATIVE EMBODIMENT 1

The present comparative embodiment provides a fiber-metal laminate and its manufacturing method. The method includes the following steps.
(1) Preparation:
   Glass fiber cloth having a thickness of 0.4 mm and an area of 200 mm×200mm was taken as fiber cloth. An aluminum alloy 6061 having a thickness of 0.4mm was taken as a metal layer.
(2) The fiber cloth was immersed into a resin slurry (including 100 weight parts of 51 epoxy resin, 50 weight parts of polysulfone resin, 12 weight parts of dicyandiamide as a curing agent, and 320 weight parts of chloroform as a solvent) for 30 minutes, so as to form a resin layer having a thickness of 0.2 mm on the surface of the fiber cloth.
(3) In an anodizing bath, 200 g/L of sulfuric acid serving as an electrolyte solution, the metal layer was electrolyzed under a voltage of 15 V and at a temperature of 25°C for 22 minutes by means of taking a graphite carbon plate as a cathode and the metal layer as an anode, so as to form an anodic oxidation layer on the surface of the metal layer. The anodic oxidation layer was provided with a plurality of micropores each having a diameter of 15µm to 50 µm.
(6) Two metal layers with the plurality micropores obtained in step (3) and immersed fiber cloth obtained in step (2) were overlaid together according to an order: metal layer-fiber cloth-metal layer, enabling the anodic oxidation layer of the metal layer to be in contact with the resin layer on the surface of the fiber cloth. Then the resin layer was cured to integrate the metal layer and the fiber cloth by hot pressing under a pressure of 2MPa and at a temperature of 165 °C for 20 minutes. After steps of cooling and pressure relief, a fiber-metal laminate denoted D1 was obtained.

### Performance tests

(1) The tensile strength of the fiber-metal laminates denoted S1-S5 and D1 were tested according to GB/T 228.1-2010, respectively.
(2) The bending strength of the fiber-metal laminates denoted S1-S5 and D1 were tested according to YB/T 5349-2006, respectively.

Obtained results were shown in Table 1.

**Table 1**

| | Tensile strength (MPa) | Bending strength (MPa) |
|---|---|---|
| S1 | 625 | 920 |
| S2 | 642 | 931 |
| S3 | 631 | 921 |
| S4 | 639 | 952 |
| S5 | 612 | 935 |
| D1 | 530 | 760 |

As can be seen from Table 1, as compared with the fiber-metal laminate in the related art, the fiber-metal laminates manufactured by the method according to embodiments of the present disclosure, each has higher tensile strength and bending strength, which demonstrates that the fiber-metal laminates manufactured by the method according to embodiments of the present disclosure have a strong adhesion between every adjacent two layers of the fiber-metal laminate.

## Claims

1. A fiber-metal laminate, comprising:
fiber cloth (3);
a resin layer (2), disposed on the fiber cloth (3);
a metal layer (1), disposed on the resin layer (2); and
a plurality of chopped fibers (4), distributed between the fiber cloth (3) and the resin layer (2),
wherein each chopped fiber (4) comprises a first part inserted into the fiber cloth (3) and a second part fixed in the resin layer (2).

2. The fiber-metal laminate of claim 1, wherein the chopped fiber (4) is at least one selected from a group consisting of glass fiber, carbon fiber, and aramid fiber.

3. The fiber-metal laminate of claim 1 or 2, wherein the chopped fibers (4) have a length of 6 mm to 30 mm, and have a cross-sectional diameter of 10 µm to 30 µm.

4. The fiber-metal laminate of any one of claims 1 to 3, wherein the metal layer (1) is one selected from a group consisting of aluminum alloy plate, titanium alloy plate, and steel plate; and the metal layer has a thickness of 0.1 mm to 2 mm.

5. The fiber-metal laminate of any one of claims 1 to 4, wherein a surface of the metal layer (1) towards the resin layer (2) is provided with a plurality of micropores having a diameter of 15µm to 50 µm.

6. The fiber-metal laminate of claim 5, wherein the surface of the metal layer (1) towards the resin layer (2) is of an anodic oxide layer being in contact with the resin layer (2).

7. The fiber-metal laminate of any one of claims 1 to 6, wherein the fiber cloth (3) is at least one selected from a group consisting of glass fiber cloth, carbon fiber cloth, and aramid fiber cloth; and the fiber cloth has a thickness of 0.1 mm to 2 mm.

8. The fiber-metal laminate of any one of claims 1 to 7, wherein the resin layer (2) is at least one selected from a group consisting of acrylic resin layer, epoxy resin layer, and urethane resin layer; and the resin layer has a thickness of 0.1 mm to 2 mm.

9. The fiber-metal laminate of any one of claims 1 to 8, wherein the metal layer (1) comprises a first metal layer (11) and a second metal layer (12), and the resin layer (2) comprises a first resin layer (21) and a second resin layer (22);
wherein the second resin layer (22) is disposed on the second metal layer (12);
the fiber cloth (3) is disposed on the second resin layer (22);
the first resin layer (21) is disposed on the fiber cloth (3);
the first metal layer (11) is disposed on the first resin layer (21); and
the plurality of chopped fibers (4) is distributed both between the second resin layer (22) and the fiber cloth (3), and between the fiber cloth (3) and the first resin layer (21).

10. A method for manufacturing a fiber-metal laminate of any one of claims 1 to 9, comprising steps of:
providing a plurality of chopped fibers (4) on a surface of the fiber cloth (3);
inserting a first part of the chopped fiber (4) into the surface of the fiber cloth (3);
immersing the surface of the fiber cloth (3) inserted with the first part of the chopped fiber (4) into a resin slurry to obtain immersed fiber cloth;
overlaying a metal layer (1) on the immersed fiber cloth; and
hot pressing to obtain the fiber-metal laminate.

11. The method of claim 10, wherein the first part of the chopped fiber (4) is inserted into the surface of the fiber cloth (3) by needle-punching treatment.

12. The method of claim 11, wherein the needle-punching treatment is performed at a needle density of 100 times/cm² to 250 times/cm², and a needle depth of 0.1 mm to 0.5 mm.

13. The method of any one of claims 10 to 12, wherein the step of providing the plurality of chopped fibers (4) on the surface of the fiber cloth (3) is performed by steps of:
placing the fiber cloth (3) in an ethanol solution;
adding the plurality of chopped fibers (4) into the ethanol solution under an ultrasonic condition;
depositing the plurality of chopped fibers (4) on the surface of the fiber cloth (3); and
drying the fiber cloth (3) deposited with the plurality of chopped fibers (4).

14. The method of any one of claims 10 to 13, wherein the step of providing the plurality of chopped fibers (4) on the surface of the fiber cloth (3) comprises:
providing the plurality of chopped fibers (4) on a first surface of the fiber cloth (3); and
providing the plurality of chopped fibers (4) on a second surface of the fiber cloth (3).

15. The method of any one of claims 10 to 14, further comprising steps of:
forming a plurality of micropores having a diameter of 15µm to 50 µm at a surface of the metal layer (1), and
attaching the surface of the metal layer (1) formed with the plurality of micropores with the surface of the immersed fiber cloth (3) inserted with the first part of the chopped fiber (4).

## Patentansprüche

1. Faser-Metall-Laminat, umfassend:
Faserstoff (3);
eine Harzschicht (2), die auf dem Faserstoff (3) angeordnet ist;
eine Metallschicht (1), die auf der Harzschicht (2) angeordnet ist; und
eine Mehrzahl geschnittener Fasern (4), die zwischen dem Faserstoff (3) und der Harzschicht (2) verteilt sind,
wobei jede geschnittene Faser (4) einen ersten Teil, der in den Faserstoff (3) eingeführt ist, und einen zweiten Teil, der in der Harzschicht (2) befestigt ist, umfasst.

2. Faser-Metall-Laminat nach Anspruch 1, wobei die geschnittene Faser (4) mindestens eine ist ausgewählt aus einer Gruppe bestehend aus Glasfaser, Kohlefaser und Aramidfaser.

3. Faser-Metall-Laminat nach Anspruch 1 oder 2, wobei die geschnittenen Fasern (4) eine Länge von 6 mm bis 30 mm aufweisen und einen Querschnittsdurchmesser von 10 µm bis 30 aufweisen.

4. Faser-Metall-Laminat nach einem der Ansprüche 1 bis 3, wobei die Metallschicht (1) eine ist ausgewählt aus einer Gruppe bestehend aus Aluminiumlegierungsplattierung, Titanlegierungsplattierung und Stahlplatten; und die Metallschicht eine Dicke von 0,1 mm bis 2 mm aufweist.

5. Faser-Metall-Laminat nach einem der Ansprüche 1 bis 4, wobei die Oberfläche der Metallschicht (1) auf die Harzschicht (2) zu mit einer Mehrzahl von Mikroporen ausgestattet ist, die einen Durchmesser von 15 µm bis 50 µm aufweisen.

6. Faser-Metall-Laminat nach Anspruch 5, wobei die Oberfläche der Metallschicht (1) auf die Harzschicht (2) zu aus einer anodischen Oxidschicht besteht, die in Kontakt mit der Harzschicht (2) steht.

7. Faser-Metall-Laminat nach einem der Ansprüche 1 bis 6, wobei der Faserstoff (3) mindestens einer ist ausgewählt aus einer Gruppe bestehend aus Glasfaserstoff, Kohlefaserstoff und Aramidfaserstoff; und der Faserstoff eine Dicke von 0,1 mm bis 2 mm aufweist.

8. Faser-Metall-Laminat nach einem der Ansprüche 1 bis 7, wobei die Harzschicht (2) mindestens eine ist ausgewählt aus einer Gruppe bestehend aus acrylischer Harzschicht, Epoxidharzschicht und Urethanharzschicht; und die Harzschicht eine Dicke von 0,1 mm bis 2 mm aufweist.

9. Faser-Metall-Laminat nach einem der Ansprüche 1 bis 8, wobei die Metallschicht (1) eine erste Metallschicht (11) und eine zweite Metallschicht (12) umfasst und die Harzschicht (2) eine erste Harzschicht (21) und eine zweite Harzschicht (22) umfasst;
wobei die zweite Harzschicht (22) auf der zweiten Metallschicht (12) angeordnet ist;
der Faserstoff (3) auf der zweiten Harzschicht (22) angeordnet ist;
die erste Harzschicht (21) auf dem Faserstoff (3) angeordnet ist;
die erste Metallschicht (11) auf der ersten Harzschicht (21) angeordnet ist; und
die Mehrzahl geschnittener Fasern (4) sowohl zwischen der zweiten Harzschicht (22) und dem Faserstoff (3) als auch zwischen dem Faserstoff (3) und der ersten Harzschicht (21) verteilt ist.

10. Verfahren für die Herstellung eines Faser-Metall-Laminats nach einem der Ansprüche 1 bis 9, umfassend die Schritte des:
Bereitstellens einer Mehrzahl geschnittener Fasern (4) auf einer Oberfläche des Faserstoffs (3);
Einführens eines ersten Teils der geschnittenen Faser (4) in die Oberfläche des Faserstoffs (3);
Eintauchens der Oberfläche des Faserstoffs (3), in den der erste Teil der geschnittenen Faser (4) eingeführt worden ist, in eine Harzaufschlämmung, um einen eingetauchten Faserstoff zu erhalten;
Auflegens einer Metallschicht (1) auf den eingetauchten Faserstoff; und ich
Heißpressens, um das Faser-Metall-Laminat zu erhalten.

11. Verfahren nach Anspruch 10, wobei der erste Teil der geschnittenen Faser (4) in die Oberfläche des Faserstoffs (3) durch Vernadelungsbehandlung eingeführt wird.

12. Verfahren nach Anspruch 11, wobei die Vernadelungsbehandlung bei einer Nadeldichte von 100 mal/cm² bis 250 mal/cm² und einer Nadeltiefe von 0,1 mm bis 0,5 mm ausgeführt wird.

13. Verfahren nach einem der Ansprüche 10 bis 12, wobei der Schritt des Bereitstellens der Mehrzahl geschnittener Fasern (4) auf der Oberfläche des Faserstoffs (3) durch die Schritte ausgeführt wird des:
Eingebens des Faserstoffs (3) in eine Ethanollösung;
Zugebens der Mehrzahl geschnittener Fasern (4) in die Ethanollösung unter Ultraschallbedingung;
Absetzens der Mehrzahl geschnittener Fasern (4) auf die Oberfläche des Faserstoffs (3); und
Trocknens des Faserstoffs (3), der mit der Mehrzahl geschnittene Fasern (4) abgesetzt worden ist.

14. Verfahren nach einem der Ansprüche 10 bis 13, wobei der Schritt des Bereitstellens der Mehrzahl geschnittene Fasern (4) auf der Oberfläche des Faserstoffs (3) Folgendes umfasst:
Bereitstellen der Mehrzahl geschnittener Fasern (4) auf einer ersten Oberfläche des Faserstoffs (3); und
Bereitstellen der Mehrzahl geschnittener Fasern (4) auf einer zweiten Oberfläche des Faserstoffs (3).

15. Verfahren nach einem der Ansprüche 10 bis 14, ferner die Schritte umfassend des:
Bildens einer Mehrzahl von Mikroporen, die einen Durchmesser von 15 µm bis 50 µm aufweisen, an der Oberfläche der Metallschicht (1) und
Anbringens der Oberfläche der Metallschicht (1), die mit der Mehrzahl von Mikroporen gebildet worden ist, wobei in die Oberfläche des eingetauchten Faserstoffs (3) der erste Teil der geschnittenen Fasern (4) eingeführt worden ist.

## Revendications

1. Stratifié de fibres-métal, comprenant :
un tissu de fibres (3) ;
une couche de résine (2) disposée sur le tissu de fibres (3) ;
une couche de métal (1) disposée sur la couche de résine (2) ; et
une pluralité de fibres hachées (4) distribuées entre le tissu de fibres (3) et la couche de résine (2),
dans lequel chaque fibre hachée (4) comprend une première partie insérée dans le tissu de fibres (3) et une deuxième partie fixée dans la couche de résine (2).

2. Stratifié de fibres-métal selon la revendication 1, dans lequel la fibre hachée (4) est au moins l'une sélectionnée parmi un groupe comprenant une fibre de verre, une fibre de carbone et une fibre d'aramide.

3. Stratifié de fibres-métal selon la revendication 1 ou 2, dans lequel les fibres hachées (4) présentent une longueur de 6 mm à 30 mm, et présentent un diamètre de section transversale de 10 µm à 30 µm.

4. Stratifié de fibres-métal selon l'une quelconque des revendications 1 à 3, dans lequel la couche de métal (1) est l'une sélectionnée parmi un groupe comprenant une plaque d'alliage d'aluminium, une plaque d'alliage de titane, et une plaque d'acier ; et la couche de métal présente une épaisseur de 0,1 mm à 2 mm.

5. Stratifié de fibres-métal selon l'une quelconque des revendications 1 à 4, dans lequel une surface de la couche de métal (1) tournée vers la couche de résine (2) est pourvue d'une pluralité de micropores présentant un diamètre de 15 µm à 50 µm.

6. Stratifié de fibres-métal selon la revendication 5, dans lequel la surface de la couche de métal (1) tournée vers la couche de résine (1) est une couche d'oxyde anodique en contact avec la couche de résine (2).

7. Stratifié de fibres-métal selon l'une quelconque des revendications 1 à 6, dans lequel le tissu de fibres (3) est au moins l'un sélectionné parmi le groupe comprenant un tissu de fibres de verre, un tissu de fibres de carbone, et un tissu de fibres d'aramide ; et le tissu de fibres présente une épaisseur de 0,1 mm à 2 mm.

8. Stratifié de fibres-métal selon l'une quelconque des revendications 1 à 7, dans lequel la couche de résine (2) est au moins l'une parmi un groupe comprenant une couche de résine d'acrylique, une couche de résine époxy, et une couche de résine d'uréthane ; et la couche de résine présente une épaisseur de 0,1 mm à 2 mm.

9. Stratifié de fibres-métal selon l'une quelconque des revendications 1 à 8, dans lequel la couche de métal (1) comprend une première couche de métal (11) et une deuxième couche de métal (12), et la couche de résine (2) comprend une première couche de résine (21) et une deuxième couche de résine (22) ;
dans lequel la deuxième couche de résine (22) est disposée sur la deuxième couche de métal (12) ;
le tissu de fibres (3) est disposé sur la deuxième couche de résine (22) ;
la première couche de résine (21) est disposée sur le tissu de fibres (3) ;
la première couche de métal (11) est disposée sur la première couche de résine (21) ; et
la pluralité de fibres hachées (4) est distribuée à la fois entre la deuxième couche de résine (22) et le tissu de fibres (3), et entre le tissu de fibres (3) et la première couche de résine (21).

10. Procédé de fabrication d'un stratifié de fibres-métal selon l'une quelconque des revendications 1 à 9, comprenant les étapes suivantes :
mise à disposition d'une pluralité de fibres hachées (4) sur une surface du tissu de fibres (3) ;
insertion d'une première partie des fibres hachées (4) dans la surface du tissu de fibres (3) ;
immersion de la surface du tissu de fibres (3) dans laquelle est insérée une première partie des fibres hachées (4) dans une pâte de résine pour l'obtention du tissu de fibres immergé ;
application d'une couche de métal (1) sur le tissu de fibres immergé ; et
pression à chaud pour l'obtention du stratifié de fibres-métal.

11. Procédé selon la revendication 10, dans lequel la première partie des fibres hachées (4) est insérée dans la surface du tissu de fibres (3) à l'aide d'un traitement par aiguilletage.

12. Procédé selon la revendication 11, dans lequel le traitement par aiguilletage est réalisé avec une densité d'aiguilles de 100 fois/cm² à 250 fois/cm², et une profondeur d'aiguille de 0,1 mm à 0,5 mm.

13. Procédé selon l'une quelconque des revendications 10 à 12, dans lequel l'étape de mise à disposition de la pluralité de fibres hachées (4) sur la surface du tissu de fibres (3) est exécutée à l'aide des étapes suivantes :
disposition du tissu de fibres (3) dans une solution d'éthanol ;
ajout de la pluralité de fibres hachées (4) dans la solution d'éthanol dans des conditions ultrasoniques ;
dépôt de la pluralité de fibres hachées (4) sur la surface du tissu de fibres (3) ; et
séchage du tissu de fibres (3) déposé avec la pluralité de fibres hachées (4).

14. Procédé selon l'une quelconque des revendications 10 à 13, dans lequel l'étape de mise à disposition de la pluralité de fibres hachées (4) sur la surface du tissu de fibres (3) comprend :
la mise à disposition de la pluralité de fibres hachées (4) sur une première surface du tissu de fibres (3) ; et
la mise à disposition de la pluralité de fibres hachées (4) sur une deuxième surface du tissu de fibres (3).

15. Procédé selon l'une quelconque des revendications 10 à 14, comprenant en outre les étapes suivantes :
formation d'une pluralité de micropores présentant un diamètre de 15 µm à 50 µm au niveau d'une surface de la couche de métal (1), et
fixation de la surface de la couche de métal (1) formée avec la pluralité de micropores à la surface du tissu de fibres (3) immergé, dans laquelle est insérée la première partie des fibres hachées (4).
